# EUROPÄISCHE PATENTSCHRIFT

(11) **EP 2 019 960 B1**
(45) Veröffentlichungstag und Bekanntmachung des Hinweises auf die Patenterteilung: **15.05.2013**
(21) Anmeldenummer: 07729408.0
(22) Anmeldetag: 22.05.2007
(51) Int. Cl.: G01B 11/24, G01B 21/20, B61K 9/12

(54) **MESSEINRICHTUNG ZUR ERMITTLUNG DES IST-ZUSTANDS VON RADSÄTZEN**
MEASURING INSTRUMENT FOR DETERMINING THE ACTUAL CONDITION OF WHEEL SETS
DISPOSITIF DE MESURE PERMETTANT DE DÉTERMINER L'ÉTAT RÉEL D'ESSIEUX

(30) Priorität: 23.05.2006 DE 102006024040
(43) Veröffentlichungstag der Anmeldung: 04.02.2009
(73) Patentinhaber: Hegenscheidt-MFD GmbH & Co. KG, 41812 Erkelenz (DE)
(72) Erfinder: DE LA RIVA, Camilo, 41516 Grevenbroich (DE); ROSENLAND, Dieter, 41844 Wegberg (DE); BRAUN, Norbert, 52159 Roetgen (DE); NIJSSEN, Theo, NL-5954 CJ Beesel (NL)
(74) Vertreter: Cohausz & Florack
(86) Internationale Anmeldenummer: PCT/EP2007/054969
(87) Internationale Veröffentlichungsnummer: WO 2007/135159

(56) Entgegenhaltungen:
- WO-A-2004/008067
- US-A- 5 636 026
- US-A- 5 793 492
- US-A1- 2003 072 001

## Beschreibung

Die Erfindung betrifft eine im Gleisrost eines Eisenbahngleises angeordnete Messeinrichtung zur Ermittlung des Ist-Zustands von Radsätzen und Rädern eines Eisenbahnfahrzeugs im Durchfahrbetrieb mithilfe von mehreren Strahlen-Optischen-Geräten, wobei die Messeinrichtung einen ersten Abschnitt zum Einrollen eines Radsatzes unter seitlicher Führung des Radsatzes, einen Messabschnitt mit einer Hilfsschiene zur Abstützung des Radsatzes auf den äußeren Rändern von dessen beiden Rädern und einen dritten Abschnitt zum Ausrollen des Radsatzes in das Eisenbahngleis aufweist, wobei der erste und der dritte Abschnitt der Messeinrichtung ebenfalls als Gleisrost ausgestaltet sind und bei welcher die Strahlen-Optischen-Geräte unterhalb des Messabschnitts angeordnet sind.

Messeinrichtungen dieser Art sind beispielsweise bekannt aus:
1. Hoffmann, Dieter: "Radprofilverschleißprüfung an vorbeifahrenden Schienenfahrzeugen".
2. EP 0 228 500 B2
3. Hauschild G./Neumann P.: "Automatische Zustandsdiagnose von Eisenbahnrädern mit dem System ARGUS" in ZEV+DET Glas.Ann.124 (2000) 12.Dezember.
4. WO 2004/085957 A1
D1: US-A-5 793 492
D2: WO 2004/008067 A
D3: US 2003/072001A1
D4: US-A-5 636 026

In diesem Zusammenhang spricht die 4. WO 2004/085957 A1 von einem Festkörper (1) auf welchem die Messeinrichtung angeordnet ist. Das Dokument D4: US 5,636,026 sieht eine "Solide Stahlplatte (12)" vor, über welche die Messeinrichtungen mit dem Durchfahrgleis festverbunden sind, wobei das Durchfahrgleis ebenfalls als Gleisrost ausgebildet ist.

Überwiegend sieht der bekannte Stand der Technik vor, dass jeweils schwergewichtige Unterstützungsunterlagen benötigt werden, um Relativbewegungen zwischen den Messgeräten und dem sich unter der Last des darüber fahrenden Eisenbahnfahrzeugs durchbiegenden Durchfahrgleis zu vermeiden. Üblich ist es, die Messeinrichtung und das Durchfahrgleis auf einem schweren Betonfundament anzuordnen. Die Kosten für ein derartiges Betonfundament sind hoch und verschlingen mitunter den halben Wert der gesamten Messanlage.

Andere, bekannte Lösungen des Standes der Technik sehen vor, zur Vermeidung von schweren Fundamenten, die Messeinrichtungen mit dem Messabschnitt des Gleises zu verbinden. Aufgrund solcher Verbindung folgt die Messeinrichtung der Durchbiegung des Gleises unter der Last des darüber rollenden Eisenbahnfahrzeugs. Eine Relativbewegung zwischen dem Gleis und der Messeinrichtung entsteht dabei nicht.

Beispielsweise sieht das Dokument D2: WO 2004/008067 A vor, die Messeinrichtungen in einem Trog anzuordnen und den Trog mit Platten unter dem Gleis zu befestigen. Die einzelnen Messgeräte der Messeinrichtung sind auf elastischen Schwingungsdämpfern im Trog gelagert. Eine Abdeckplatte mit Öffnungen für Lichtquellen und Kameras sorgt dafür, dass nichts von oben in den Trog hineinfällt, während ein Luftvorhang die optischen Fenster oder Linsen vor Staub, kleinen Gegenständen oder Blättern schützt.

Ein anderes Dokument D3: US 2003/072001 A1 sieht das Anordnen von Strahlen-Optischen-Geräten auf Platten vor, die jeweils einer Schiene des Gleises zugeordnet und mit dieser fest verbunden sind. Dabei sind die Strahlen-Optischen-Geräte jeweils in einem geringen vertikalen Abstand zum Messobjekt, dem Eisenbahnrad, angeordnet. Der zu geringe vertikale Abstand führt aber zu Ungenauigkeiten bei der Messung, insbesondere bei der Messung des Durchmessers und des Profilschnitts.

Der Nachteil eines nicht ausreichenden vertikalen Abstands zwischen den Messgeräten und dem Messobjekt haftet auch einer Lösung an, die aus dem Dokument D1: US-A-5 793 492 bekannt geworden ist. Hierbei sind die Strahlen-Optischen-Geräte jeweils in Gehäusen untergebraucht, welche auf dicken Stahlplatten montiert sind. Die Stahlplatten (drei Stück werden genannt!) ruhen unabhängig vom Gleis, d.h. Schienen und Schwellen, auf Schwingungsdämpfern. Damit sind die Messeinrichtungen zwar unabhängig von den Durchbiegungen des Gleises, aber deren Anbringung auf mehreren dicken Stahlplatten sowie der erkennbar geringe vertikale Abstand zwischen den Messeinrichtungen und dem Messobjekt erhöhen den rechnerischen Aufwand, welche den Gegenstand von D1 auszeichnen.

Die Erfindung geht von der Aufgabenstellung aus, teure Fundamente oder Befestigungseinrichtungen zu vermeiden, um die Messanlage zu vereinfachen und preiswerter zu gestalten.

Ausgehend von der Erkenntnis, dass Relativbewegungen bis zu einer Größe von 25 mm zwischen den Messgeräten und dem Durchfahrgleis von modernen Strahlen-Optischen-Geräten beherrscht werden können, sieht die Erfindung vor, die Messeinrichtungen vom Durchfahrgleis zu entkoppeln. Aus dieser Erkenntnis sind der erste und der dritte Abschnitt der Messeinrichtung elastisch im Schotter des Oberbaus des Eisenbahngleises gebettet, während die Strahlen-Optischen-Geräte zur Ermittlung des Ist-Zustands des Radsatzes bzw. der Räder des Eisenbahnfahrzeugs beruhrungslos gegenüber den übrigen Teilen der Messeinrichtung und erschütterungsfrei in einer vorbestimmten Lage zum Messabschnitt der Messeinrichtung auf dem Planum des Eisenbahngleises gelagert sind. Hiermit entfällt das Herstellen von teuren Fundamenten oder sonstigen soliden Einrichtungen, über welche die Messeinrichtungen mit dem Durchfahrgleis verbunden werden mussen.

Nach einer bevorzugten Ausführungsform werden die Strahlen-Optischen-Geräte auf einer Schicht von Leichtbeton gelagert, deren Höhe gering ist im Verhältnis zur übrigen Schicht des Schotterbetts des Oberbaus des Ersenbahngleises. Ein weitergehender Vorteil wird erhielt, wenn die Strahlen-Optischen-Geräte auf einer Fußplatte gelagert werden. Eine derartige Fußplatte kann sodann als Trog ausgebildet sein, der rings von seitlichen Wandungen umschlossen ist. Dieser Trog erstreckt sich über die gesamte Breite des Eisenbahngleises entsprechend der jeweiligen Spurweite. Der Trog ist dazu vorgesehen, alle Strahlen-Optischen-Geräte der Messeinrichtung aufzunehmen. Zwei dieser Strahlen-Optischen-Geräte sind dazu vorgesehen, dass AR-Maß eines Eisenbahnrades zu ermitteln (AR = Abstand der Räder). Zwei weitere Strahlen-Optische-Geräte sind dazu vorgesehen, jeweils die Profile des Querschnitts der beiden Räder eines Radsatzes eines Eisenbahnfahrzeugs zu ermitteln. Zwei weitere Strahlen-Optische-Geräte dienen dazu, jeweils die Durchmesser der beiden Räder eines Radsatzes längs eines Abschnitts einer vorgegebenen ersten Umfangslinie der Räder zu ermitteln. Mit zwei weiteren Strahlen-Optischen-Geräten werden die Durchmesser der beiden Räder eines Radsatzes längs eines Abschnitts einer vorgegebenen zweiten Umfangslinie der Räder ermittelt, wobei sich die zweite Umfangslinie in einem vorgegebenen seitlichen Abstand zur ersten Umfangslinie befindet. Das Strahlen-Optische-Gerät besteht aus einer Strahlenquelle zur Erzeugung eines Licht- oder Laserstrahls und zur Projektion des erzeugten Strahls auf eine zu vermessende Stelle des Radsatzes oder seiner Räder, sowie aus einer Optik zum Auffangen des von der bestrahlten Radoberfläche reflektierten Strahls und zur Umwandlung des reflektierten Strahls in ein elektrisches Signal, das sodann einer Einrichtung zur Auswertung zugeführt werden kann. Bevorzugt wird ein fächerförmiger Strahlengang, dessen Projektion auf dem Eisenbahnrad eine Linie darstellt. Die diesbezüglichen, einschlägigen Geräte und Techniken sind ausführlich beschrieben in der EP 0 228 500 B2 und auch in der WO 2004/085957 A1.

Der Trog weist auch eine Abdeckung auf, die im Bereich eines Strahlengangs ausgespart ist. Die Aussparung hat wiederum eine Abdeckung, die während einer Messung aufklappbar ist. Auch ist der Trog an eine Quelle für ein gasförmiges Medium angeschlossen, insbesondere Luft, welche innerhalb des Troges ein Überdruck erzeugt. Hierdurch wird erreicht, dass weder Nässe noch Verschmutzungen in das Innere des Troges gelangen und die Wirkungsweise der Strahlen-Optischen-Geräte beeinträchtigen können.

Wenigstens der erste Abschnitt zum Einrollen des Radsatzes in den Messabschnitt besteht aus einem Gleisstück in Form eines Gleisrostes und unterscheidet sich insofern nicht wesentlich von Gleisrost eines normalen Eisenbahngleises. Die beiden Schienenstücke des ersten Abschnitts werden auf ihren jeweiligen Außenseiten von Leisten flankiert, die mit geringem stetigen Anstieg im Bereich des Messabschnitts den jeweiligen Schienenkopf um wenige Millimeter überragen und in eine Hilfsschiene übergehen, die den Messabschnitt überbrückt.

Der dritte Abschnitt zum Ausrollen des Radsatzes ist gleichartig ausgestaltet wie der erste Abschnitt zum Einrollen des Radsatzes, das heißt, auch die beiden Schienenstücke dieses dritten Abschnitts werden auf ihren jeweiligen Außenseiten von Leisten flankiert, die, mit stetigem geringen Abstieg, im Bereich des Messabschnitts den jeweiligen Schienenkopf um wenige Millimeter überragen. Mithilfe der Leisten wird der Radsatz sanft, das heißt ohne ruckartigen Übergang, auf die Hilfsschiene hinauf und von dieser wieder herab geleitet. An der Hilfsschiene ist der Radsatz jeweils nur auf einer schmalen Breite an der Außenseite des Profils seiner Räder abgestützt, während das übrige Profil, insbesondere der Spurkranz, frei liegt und so vom Strahlengang der zugehörigen Strahlen-Optischen-Gerätschaft erfasst werden kann.

Der erste und der dritte Abschnitt der Messeinrichtung haben jeweils eine Länge zwischen 2,5 m und 5 m, während sich die Hilfsschiene über eine Länge zwischen 0,25 m und 0,5 m erstreckt. Die Messeinrichtung kann von Eisenbahnfahrzeugen mit Radsatzlasten bis zu 35 t bei Geschwindigkeiten zwischen 5 km/h und 50 km/h befahren werden. Sie ist in beiden Fahrtrichtungen gleichermaßen befahrbar.

Der Trog, in welchem sich die Strahlen-Optische-Gerätschaft befindet, ist innerhalb eines zweiten Troges angeordnet, wobei die Abstände der Außenwand des ersten Troges und der Innenwand des zweiten Troges ringsum annähernd gleich groß sind. Gegebenenfalls können auch noch Zwischenwände oder Zwischenstege innerhalb des zweiten Troges vorgesehen sein, an denen der erste Trog in seiner Lage in Bezug auf den Messabschnitt der Messeinrichtung ausgerichtet werden kann. Die Wandungen des zweiten Trogs haben längs ihrer Unterseite Aussparungen, über welche Wasser und Schmutz abfließen können. Insbesondere liegt der zweite Trog auch noch auf einer flachen Platte auf, die auf dem Planum des Eisenbahngleises oder einer dünnen Schicht von Leichtbeton gelagert ist. Der erste Trog ruht innerhalb des zweiten Trogs auf wenigstens drei elastischen Stützten, welche zugleich in ihrer Höhenlage verstellbar ist, sodass die Strahlen-Optischen-Geräte erschütterungsfrei gelagert sind..

Nachfolgend wird die Erfindung an einem Ausführungsbeispiel näher beschrieben.

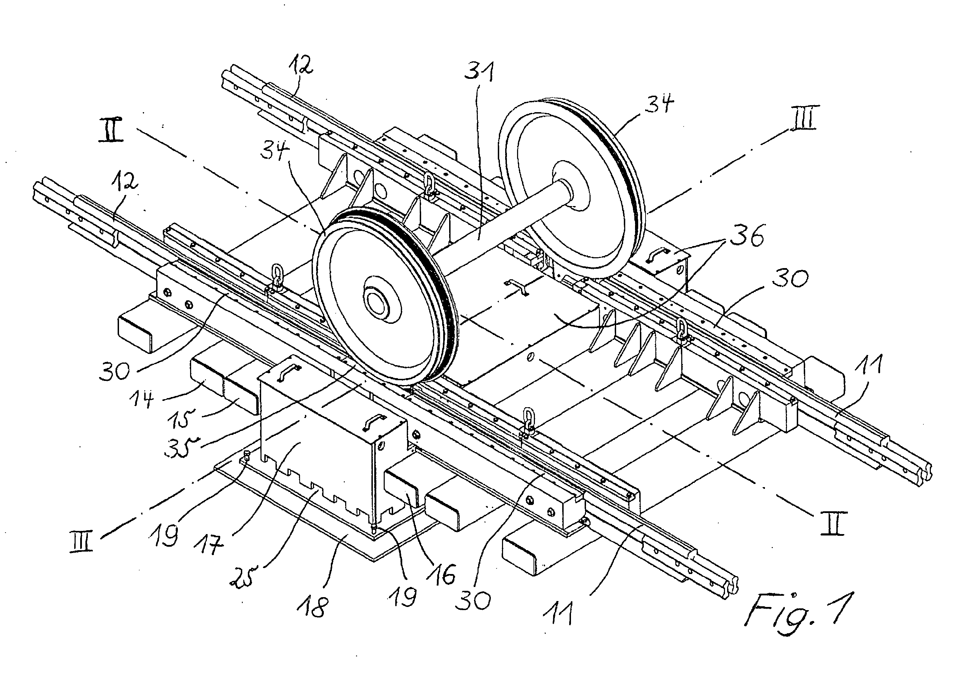

Es zeigen jeweils in verkleinertem Maßstab die
- Fig. 1 eine perspektivische Seitenansicht der Messeinrichtung mit einem darüber rollenden Radsatz.
- Fig. 2 einen Längsschnitt durch die Messeinrichtung entlang der Linie II-II der Fig. 1.
- Fig. 3 einen Querschnitt längs der Linie III-III der Fig. 1 und
- Fig. 4 ein Schema der Anordnung der Strahlen-Optischen-Gerätschaft.

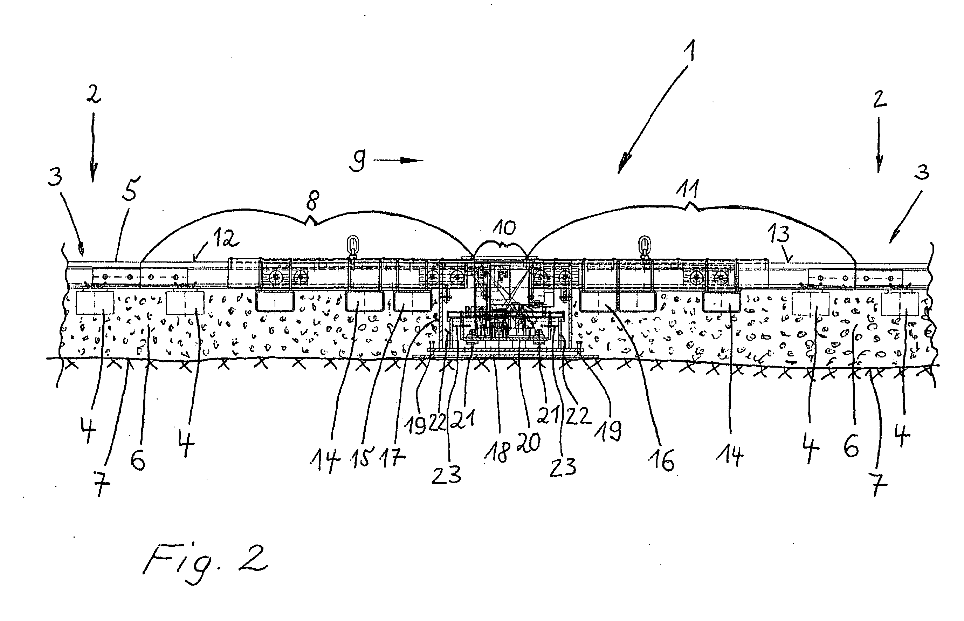

Die Messeinrichtung 1 ist im Gleisrost 2 eines Eisenbahngleises 3 angeordnet. Von dem Gleisrost 2 zeigt die Figur 2 jeweils die Schwellen 4 und die darauf befestigten Schienen 5. Das Gleisrost 2 ist in Schotter 6 gebettet, der über ein Planum 7 gebreitet ist.

Die Messeinrichtung 1 besteht aus einem ersten Abschnitt 8 zum Einrollen eines Eisenbahnfahrzeugs (nicht gezeigt) in der Fahrtrichtung 9. Wiederum in der Fahrtrichtung 9 folgt auf den ersten Abschnitt 8 ein zweiter Abschnitt, der sogenannte Messabschnitt 10. Wiederum der Fahrtrichtung 9 folgend folgt auf den Messabschnitt 10 der dritte Abschnitt 11, der sogenannte Ausrollabschnitt. Der erste Abschnitt 8 und der dritte Abschnitt 11 sind annähernd gleich lang. Die Abschnitte 8 und 11 werden seitlich von Schienen 12 und 13 begrenzt, die wiederum an Schwellen 14 befestigt sind, welche im Schotter 6 gebettet sind. Somit sind der erste 8 und der dritte Abschnitt 11 in der gleichen Weise im Schotter 6 des Oberbaus des Eisenbahngleises 3 gelagert, wie es das Eisenbahngleis 3 selbst ist.

Im Bereich des Messabschnitts 10 ist eine Schwelle ausgespart. Folglich wird der Messabschnitt 10 in Richtung 9 des Eisenbahngleises 3 von den beiden Schwellen 15 und 16 begrenzt. In der Aussparung zwischen den beiden Schwellen 15 und 16 ist ein zweiter Trog 17 angeordnet, welcher sich über eine Platte 18 auf dem Planum 7 abstützt. Die Platte 18 liegt direkt auf dem Planum 7 auf oder ist auf einer dünnen Schicht von Leichtbeton (nicht gezeigt) gelagert. Über Stellschrauben 19 kann der zweite Trog 17 gegenüber der Platte 18 in seiner horizontalen Lage ausgerichtet werden.

Innerhalb des zweiten Trogs 17 ist ein erster Trog 20 angeordnet. Der erste Trog 20 ruht im zweiten Trog 17 auf elastischen Stützen 21, welche erschütterungsfrei sind und in ihrer horizontalen Höhe um ein geringes Maß verstellbar sind. Zwischenwände 22, zwischen dem ersten Trog 20 und dem zweiten Trog 17 sind dazu vorgesehen, den ersten Trog 20 auch gegenüber dem zweiten Trog 17 in eine genaue seitliche Lage zum Messabschnitt 10 zu bringen. Dazu sind seitliche Stellschrauben 23 vorgesehen, welche nach dem Ausrichten des ersten Trogs 20 innerhalb des zweiten Trogs 17 gelöst oder entfernt werden, sodass der erste Trog 20 mit den übrigen Teilen der Messeinrichtung 1 keinerlei Berührung mehr aufweist mit Ausnahme der elastischen Stützen 21 auf welchen er ruht.

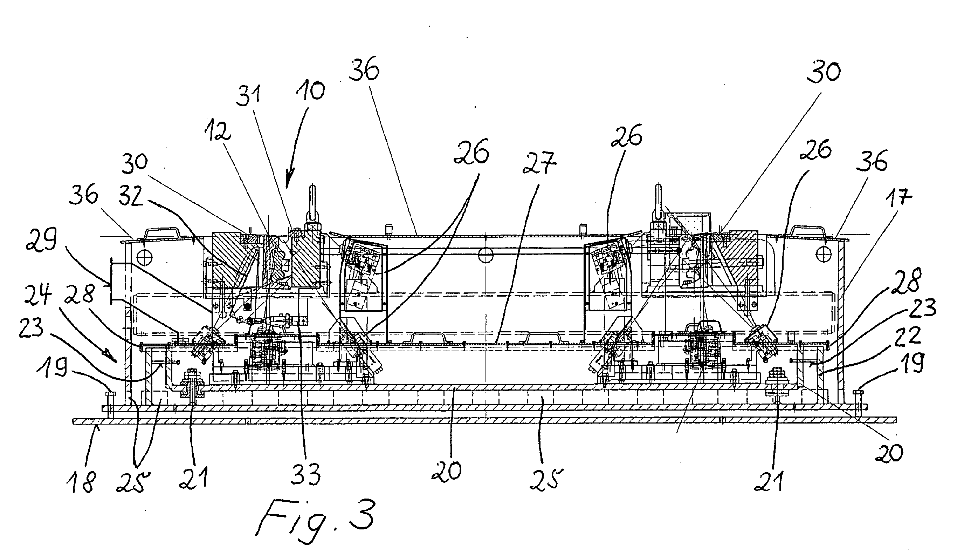

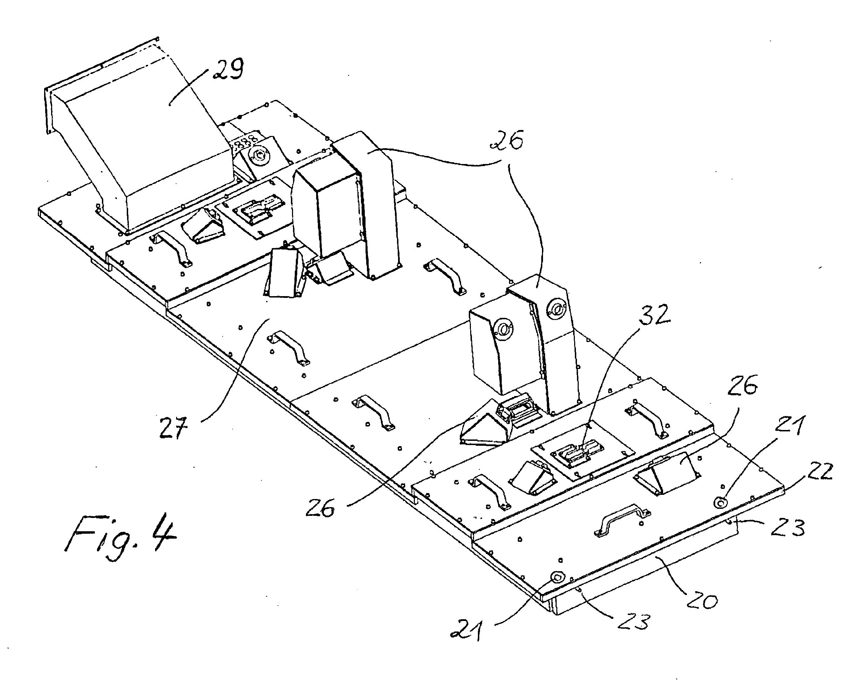

Die Fig. 3 verdeutlicht diese Anordnung noch einmal in einer anderen Ansicht. Ringsum auf seiner Unterseite 24 weist der zweite Trog 17 seitliche Öffnungen 25 auf, über welche bei Bedarf Schmutz und Regenwasser ausgetragen werden können. In dem ersten Trog 20 ist die Strahlen-Optische-Gerätschaft 26 angeordnet, wie sie an sich aus dem Stand der Technik bekannt ist. Diese Strahlen-Optische-Gerätschaft 26 ist auch in ihrer gegenseitigen Lage aus der Fig. 4 entnehmbar.

Eine Abdeckung 27 des ersten Trogs 20, welche bis über die Zwischenwand 22 reicht, schützt die Strahlen-Optische-Gerätschaft 26 vor Verschmutzungen oder Beschädigungen. Die Abdeckung 27 übergreift mit ihren seitlichen Rändern 28 die Zwischenwand 22, liegt aber auf der Oberseite der Zwischenwand 22 nicht auf sondern auf dem oberen Rand des ersten Trogs 20. Von außen her mündet in das Innere des ersten Trogs 20 ein Stutzen 29, über welchen dem ersten Trog 20 von außen her Luft zugeführt wird. Die Luft wird dem ersten Trog 20 stetig unter Überdruck zugeführt und tritt unterhalb der seitlichen Ränder 28 aus.

Wie in der Fig. 3 weiter zu erkennen, wird die Schiene 12 des ersten Abschnitts 8 auf ihrer Außenseite seitlich von einer Leiste 30 flankiert. Die Leiste 30 hat von der Schiene 5 her zum Messabschnitt 10 hin einen geringen, stetigen Anstieg und überragt den Schienenkopf der Schiene 12 vor dem Übergang auf eine Stützschiene 35 um ein geringes Maß. Über die seitliche Leiste 30 rollen die Räder 34 des Radsatzes 31 vom ersten Abschnitt 8 sanft auf den Messabschnitt 10.

Im Bereich des Messabschnitts 10 wird die Messeinrichtung 1 von Klappen 32 abgedeckt, welche sich nur dann öffnen, bevor ein Radsatz 31 darüber rollt, um sich hinterher wieder zu schließen. Ein Mechanismus 33 dient zur Bewegung der Klappen 32. Eine obere Gesamtabdeckung 36 verschließt die gesamte Messeinrichtung 1.

### Bezugszeichenliste

| | |
|---|---|
| 1 | Messeinrichtung |
| 2 | Gleisrost |
| 3 | Eisenbahngleis |
| 4 | Schwelle |
| 5 | Schiene |
| 6 | Schotter |
| 7 | Planum |
| 8 | 1. Abschnitt |
| 9 | Fahrtrichtung |
| 10 | Messabschnitt |
| 11 | 3. Abschnitt |
| 12 | Schiene |
| 13 | Schiene |
| 14 | Schwelle |
| 15 | Schwelle |
| 16 | Schwelle |
| 17 | zweiter Trog |
| 18 | Platte |
| 19 | Stellschraube |
| 20 | erster Trog |
| 21 | elastische Stütze |
| 22 | Zwischenwand |
| 23 | Stellschraube |
| 24 | Unterseite |
| 25 | seitliche Öffnung |
| 26 | Strahlen-Optische-Gerätschaft |
| 27 | Abdeckung |
| 28 | seitlicher Rand |
| 29 | Stutzen |
| 30 | Leiste |
| 31 | Radsatz |
| 32 | Abdeckklappe |
| 33 | Mechanismus |
| 34 | Eisenbahnrad |
| 35 | Stützschiene |
| 36 | Gesamtabdeckung |

## Patentansprüche

1. Im Gleisrost eines Eisenbahngleises angeordnete Messeinrichtung zur Ermittlung des Ist-Zustands von Radsätzen und Rädern eines Eisenbahnfahrzeugs im Durchfahrbetrieb mithilfe von mehreren Strahlen-Optischen-Geräten, wobei die Messeinrichtung einen ersten Abschnitt zum Einrollen eines Radsatzes unter seitlicher Führung des Radsatzes, einen Messabschnitt mit einer Hilfsschiene zur Abstützung des Radsatzes auf den äußeren Rändern von dessen beiden Rädern und einen dritten Abschnitt zum Ausrollen des Radsatzes in das Eisenbahngleis aufweist, wobei der erste und der dritte Abschnitt der Messeinrichtung ebenfalls als Gleisrost ausgestaltet und elastisch im Schotter (6) des Oberbaus des Eisenbahngleises (3) gebettet sind und bei welcher die Strahlen-Optischen-Geräte unterhalb des Messabschnitts angeordnet und berührungslos gegenüber den übrigen Teilen der Messeinrichtung (1) sowie erschütterungsfrei in einer vorbestimmten Lage zum Messabschnitt (10) der Messeinrichtung (1) auf einer Fussplatte auf dem Planum (7) des Eisenbahngleises (3) gelagert sind, wobei die Fußplatte als erster Trog (20) ausgebildet ist, der rings von seitlichen Wandungen umschlossen ist, der mehrere Abdeckungen (27) aufweist, die jeweils im Bereich eines Strahlengangs ausgespart und während einer Messung aufklappbar sind **dadurch gekennzeichnet, dass** der erste Trog (20) innerhalb eines zweiten Troges (17) mit annähernd gleichgroßen Abständen ringsum zu dessen Wänden angeordnet ist.

2. Messeinrichtung nach Anspruch 1, **dadurch gekennzeichnet, dass** die Wandungen des zweiten Trogs (17) längs ihrer Unterseite (24) Aussparungen (25) zum Abfluss von Wasser und Schmutz aufweisen.

3. Messeinrichtung nach Anspruch 2, **dadurch gekennzeichnet, dass** der zweite Trog (17) auf einer flachen Platte (18) aufliegt, die unmittelbar auf dem Planum (7) des Eisenbahngleises (3) oder auf einer dünnen Schicht aus Leichtbeton gelagert ist.

4. Messeinrichtung nach Anspruch 1, **dadurch gekennzeichnet, dass** der erste Trog (20) innerhalb des zweiten Trogs (17) auf wenigstens drei elastischen Stützen (21) ruht.

5. Messeinrichtung nach den Ansprüchen 1 bis 4, **dadurch gekennzeichnet, dass** der erste Trog (20) an eine Quelle (29) für Druckluft angeschlossen ist.

6. Messeinrichtung nach Anspruch 1, **dadurch gekennzeichnet, dass** wenigstens der erste Abschnitt (8) zum Einrollen des Radsatzes (31) in den Messabschnitt (10) aus einem Gleisstück besteht, dessen beide Schienenstücke (12) auf ihrer jeweiligen Außenseite von Leisten (30) flankiert werden, die, mit stetigem geringen Anstieg, im Bereich des Messabschnitts (10) den jeweiligen Schienenkopf um einige Millimeter überragen und in die Hilfsschiene übergehen, die den Messabschnitt (10) überbrückt.

7. Messeinrichtung nach Anspruch 6, **dadurch gekennzeichnet, dass** der dritte Abschnitt (11) zum Ausrollen des Radsatzes (31) gleichartig ausgestaltet ist wie der erste Abschnitt (8) zum Einrollen des Radsatzes.

8. Messeinrichtung nach Anspruch 7, **dadurch gekennzeichnet, dass** der erste (8) und der dritte Abschnitt (11) jeweils eine Länge zwischen 2,5 m und 5 m haben.

9. Messeinrichtung nach Anspruch 1, **dadurch gekennzeichnet, dass** der Messabschnitt (10) eine Länge zwischen 0,25 m und 0,5 m hat.

10. Messeinrichtung nach Anspruch 1, **dadurch gekennzeichnet, dass** die Messeinrichtung (1) von Eisenbahnfahrzeugen mit Geschwindigkeiten zwischen 5 km/h und 50 km/h befahrbar ist.

11. Messeinrichtung nach Anspruch 10, **dadurch gekennzeichnet, dass** die Messeinrichtung (1) in beiden Richtungen (9) des Eisenbahngleises (3) befahrbar ist.

## Claims

1. Measuring device, positioned in the track panel of a railway track, for determining the actual condition of wheelsets and wheels of a railway vehicle passing by using several optical beam devices, with the measuring device featuring a first section for rolling in a wheelset under lateral guidance of the wheelset, a measurement section with an auxiliary rail for supporting the wheelset on the outer edges of its two wheels and a third section for rolling out the wheelset into the railway track, with the first and third section of the measuring device also designed as track panels and flexibly embedded in the ballast (6) of the superstructure of the railway track (3) and of which the optical beam devices are positioned beneath the measurement section and mounted vibration-free on a base plate on the formation (7) of the railway track (3) in a predetermined position in relation to the measurement section (10) of the measuring device (1) with no contact to the other parts of the measuring device (1), with base plate designed as first trough (20), circumferentially enclosed by side walls, with several coverings (27) which each have a recess in the area of the beam path and can be opened during measurements, **characterised in that** the first trough (20) is positioned within a second trough (17) at an approximately even distances to the walls all round.

2. Measuring device according to claim 1,
**characterised in that** the walls of the second trough (17) are having recesses (25) along their bottom (24) to drain water and dirt.

3. Measuring device according to claim 2,
**characterised in that** the second trough (17) lies on a flat plate (18) mounted directly on the formation (7) of the railway track (3) or on a thin layer of lightweight concrete.

4. Measuring device according to claim 1,
**characterised in that** the first trough (20) rests on at least three flexible supports (21) within the second trough (17).

5. Measuring device according to claims 1 to 4, **char acterised** in that the first through (20) is connected to a compressed air supply (29).

6. Measuring device according to claim 1,
**characterised in that** at least the first section (8) used to roll the wheelset (31) into the measurement section (10) consists of a track segment in which both rail segments (12) are flanked on their outer side by strips (30) which, in the area of the measurements section (10), project beyond the respective rail head by several millimetres at a continuous small increase and pass into the auxiliary rail which bridges the measurement section (10).

7. Measuring device according to claim 6,
**characterised in that** the third section (11) for rolling out the wheelset (31) has the same design as the first section (8) for rolling in the wheelset.

8. Measuring device according to claim 7,
**characterised in that** the first (8) and the third section (11) are having a length between 2.5 and 5 m.

9. Measuring device according to claim 1,
**characterised in that** the measured section (10) has a length between 0.25 and 0.5 m.

10. Measuring device according to claim 1,
**characterised in that** the measuring device (1) is accessible for railway vehicles with a speed between 5 and 50 km/h.

11. Measuring device according to claim 10,
**characterised in that** the measuring device (1) is accessible in both directions (9) of the railway track (3).

## Revendications

1. Dispositif de mesure disposé dans la latte d'un rail ferroviaire pour la détermination de l'état réel d'essieux et de roues de véhicules ferroviaires en service de traversée à l'aide de plusieurs appareils à rayons optiques sachant que le dispositif de mesure présente une première section pour l'enroulement d'un essieu avec guidage latéral de l'essieu, une section de mesure avec un rail auxiliaire pour soutenir l'essieu sur les parties externes de ses deux roues et une troisième section pour le déroulement de l'essieu dans le rail ferroviaire, sachant que la première et la troisième sections du dispositif de mesure sont également conçues pour être disposées dans la latte de rail et noyées élastiquement dans le ballast (6) de la superstructure du rail ferroviaire (3) et que les appareils à rayons optiques sont disposés en-dessous de la section de mesure et sans contact avec les autres pièces du dispositif de mesure (1) tout comme à l'abri des secousses dans une position prédéfinie par rapport à la section de mesure (10) du dispositif de mesure (1) sur une semelle sur la plateforme de voie (7) du rail ferroviaire (3), sachant que la semelle est formée comme première auge (20) entourée de parois latérales, présentant plusieurs recouvrements (27) qui sont chacun évidés pour laisser passer un rayon et qui sont repliables pendant une mesure
et **caractérisés par le fait**
**que** la première auge (20) est disposée à l'intérieur d'une deuxième auge (17) quasiment à la même distance de ses parois tout autour.

2. Dispositif de mesure selon revendication 1, **caractérisé par le fait que** les parois de la deuxième auge (17) présentent, le long de leur face inférieure (24) des évidements (25) pour l'écoulement de l'eau et des saletés.

3. Dispositif de mesure selon revendication 2, **caractérisé par le fait que** la deuxième auge (17) est posée sur une plaque plate (18) qui est elle-même logée directement sur la plateforme de voie (7) du rail ferroviaire (3) ou sur une fine couche de béton léger.

4. Dispositif de mesure selon revendication 1 **caractérisé par le fait que** la première auge (20) repose, à l'intérieur de la deuxième auge (17) sur au moins trois supports élastiques (21).

5. Dispositif de mesure selon les revendications 1 à 4, **caractérisé par le fait que** la première auge (20) est raccordée à une source (29) d'air comprimé.

6. Dispositif de mesure selon revendication 1 **caractérisé par le fait qu'**au moins la première section (8) pour l'enroulement de l'essieu (31) dans la section de mesure (10) est constituée d'un morceau de rail dont les côtés extérieurs respectifs des deux morceaux de rail (12) sont flanqués de listeaux (30) qui dépassent le champignon de rail correspondant de quelques millimètres avec une augmentation faible et continue dans la zone de la section de mesure (10) et se fondent dans le rail auxiliaire qui fait la liaison avec la section de mesure (10).

7. Dispositif de mesure selon revendication 6 **caractérisé par le fait que** la troisième section (11) pour le déroulement de l'essieu (31) est conçue comme celle de la première section (8) pour l'enroulement de l'essieu.

8. Dispositif de mesure selon revendication 7 **caractérisé par le fait que** la première (8) et la troisième section (11) possèdent chacune une longueur comprise entre 2,5 m et 5 m.

9. Dispositif de mesure selon revendication 1 **caractérisé par le fait que** la section de mesure (10) possède une longueur comprise entre 0,25 m et 0,5 m.

10. Dispositif de mesure selon revendication 1 **caractérisé par le fait que** les véhicules ferroviaires peuvent rouler sur le dispositif de mesure (1) à des vitesses comprises entre 5 km/h et 50 km/h.

11. Dispositif de mesure selon revendication 10 **caractérisé par le fait qu'**il est possible de rouler sur le dispositif de mesure (1) dans les deux sens (9) du rail ferroviaire (3).
